# EUROPEAN PATENT APPLICATION

(11) **EP 1 339 027 A1**
(43) Date of publication of application: **27.08.2003**
(21) Application number: 01113443.4
(22) Date of filing: 01.06.2001
(51) Int. Cl.: G07F 7/08, G07F 7/10, G07C 9/00, G07F 19/00

(54) **A secure multicurrency module for microprocessors**

(71) Applicant: Software Consultants (I.S.) Inc., Midhurst, West Sussex, GU29 9DR (GB); Provan, Alasdair M., Midhurst, West Sussex GU29 9DR (GB); Carter, Nicholas, Fareham, Hants PO15 5BX (GB)
(72) Inventor: Provan, Alasdair M., Midhurst, West Sussex, GU29 9DR (GB); Carter, Nicholas, Fareham, Hants, PO15 6HR (GB)
(74) Representative: Fox, Nicholas Russell Philip

(57) **Abstract**

This module has the ability to convert monies from one currency to another using the currency rate of the day obtained from the entity through the Internet or the body which issues the base funds or the average rate held on a Smart Card under secure conditions.
It has the ability to distinguish between funds which are authorized for conversion by the country's authorities and those which can only be used in that country. The conversion is performed at the time of loading a Smart Card through a terminal or transferring from one Smart Card to another using a terminal. It has the ability to verify that both Smart Cards and terminals are genuine mediums for receiving and paying funds. It also has the ability to verify that the user is the genuine cardholder. All data is encrypted automatically through the use of controls in the module.

## Description

### FIELD OF THE INVENTION

This invention consists of a module within a microprocessor which can be embedded in a Smart Card, telephone, mobile phone or terminal and will retain personal data of the user and funds loaded into memory which are held in local currency and U.S. Dollars. It has the ability to distinguish between authorized funds, where exchange control exists in some countries, and local funds which are not convertible. It will convert funds held into whichever currency is required by the user. All data is encrypted on transmission to a terminal which would have a similar microprocessor embedded in its circuitry

### BACKGROUND OF THE INVENTION

The necessity to have a medium of using cash to purchase and sell goods, pay bills, pay persons for services and transfer funds from one place to another in local and foreign currencies has become acute considering the number of international travellers that exist to-day.

The need to offer a high degree of security in the transfer of funds is of primary importance owing to the growing problem of counterfeit notes and fraudulent use of debit and credit cards.

Governments have found it increasingly difficult to issue notes of tender as they continually have to safeguard against counterfeiters and are using all kinds of holograms, inks, watermarks and methods in printing bills to counteract this growing problem The cost of printing notes has spiralled.

Banks, on the other hand, find it increasingly costly to receive and issue money and many regard retail banking as a non-profitable exercise.

Credit/Debit Card Companies have found fraud increasing dramatically with people fraudulently issuing cards with numbers which have been obtained illicitly and which costs them millions of dollars annually.

Credit/Debit Card Companies have found fraud increasing dramatically with people fraudulently issuing cards with numbers which have been obtained illicitly and which costs them millions of dollars annually.

The transfer of funds has also been subject to fraud in large amounts and has cost Companies, Banks and individuals millions of dollars annually.

The recipient of funds has met with unacceptable delays in obtaining monies transferred to them through Banks and other institutions and have questioned the cost of the fees charged for such transfers. They would welcome a simpler way of transferring funds

These factors and many others, have prompted this invention which is a dedicated electronic microprocessor which has a secure module that enables algorithms to be used for exponentiating a private and public key which would secure the transmission of data and funds.

### SUMMARY OF THE INVENTION

This module which is part of the microprocessor and which can be embedded in a Smart Card or Terminal, enables currencies of all types from all nations to be converted within the microprocessor and to be issued in the currency of the country where it is spent.

It will distinguish between funds authorized for foreign use by the country's Central Bank or authorizing authority and those funds which may only be used locally within the country.

The conversion of monies will be carried out at time of loading funds from an Automatic Teller Machine or other terminal when the rate of exchange for that transaction will be loaded.

The full identity of the user would be stored within the microprocessor and his/her fingerprint, iris, hand and facial vectors would likewise be stored. When vectors are produced from any of those devices, they would be compared with the vectors stored on the microprocessor.

It would have a serial number stored in addition to a Card Number, both of which would be used in encoding every transaction.

At time of a transaction taking place, the card would record the details of the transaction, e.g. date, vendor, rate and amount within its memory and which the user can read using a hand held terminal or a PC or laptop computer.

It would also compute the loyalty points, if they apply, and store them in one of 40 loyalty banks held on the Smart Card microprocessor.

The microprocessor would be embedded in Smart Cards and terminals, to ensure compatibility so that the speed of exponentiation and processing the transaction are equitable and do not pose a delay when a user submits his card

### METHODOLOGY

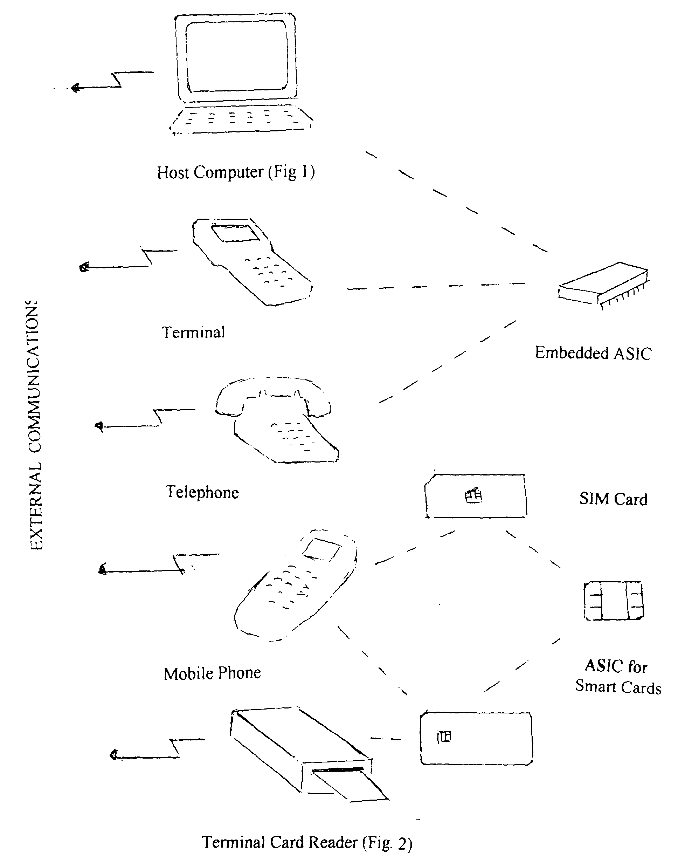

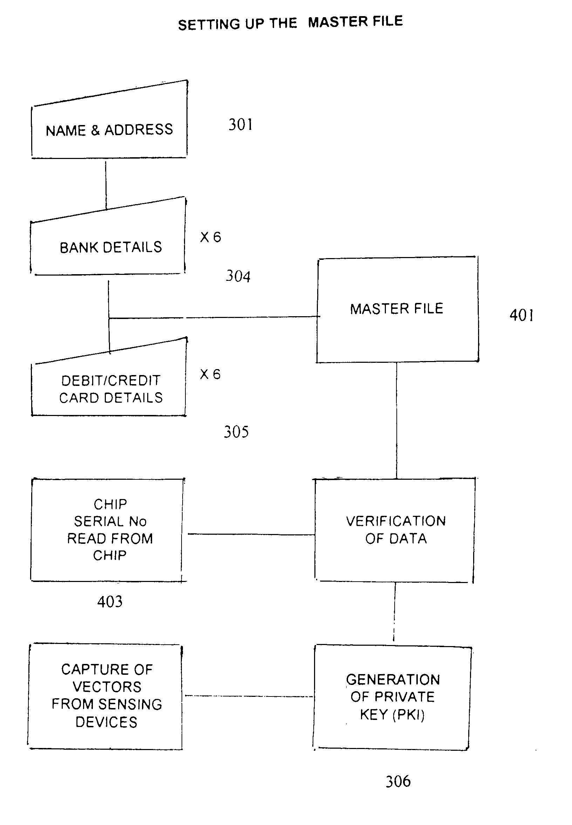

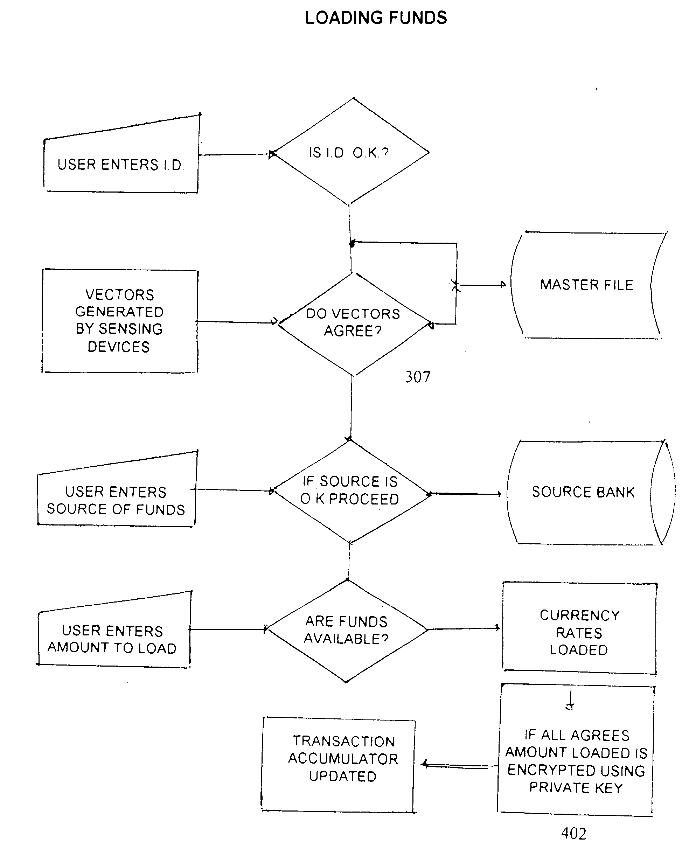

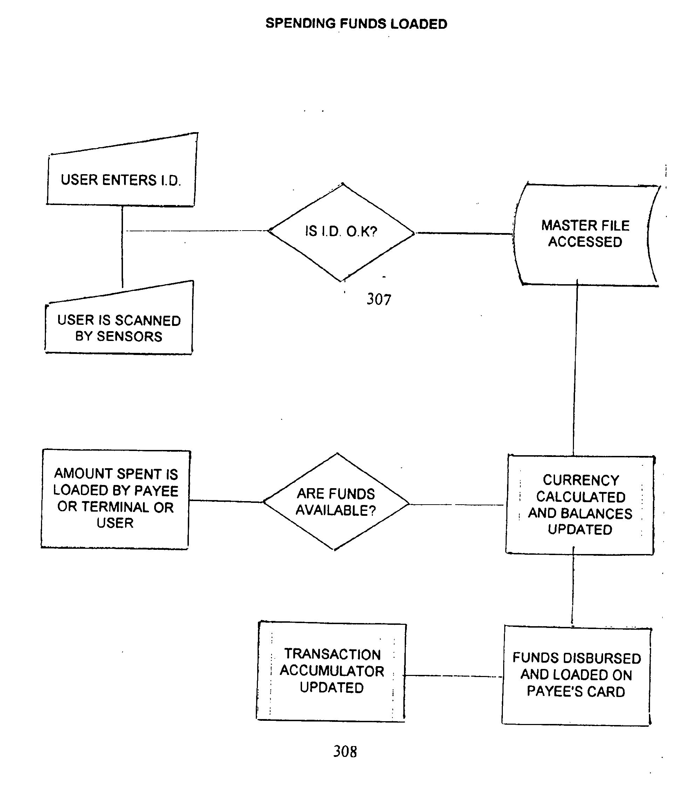

The microprocessor which may be embedded in a Smart Card (Fig 1),Page 12), terminal, (Fig. 2) telephone (Fig. 3) or other device and is used principally for cash transactions between two parties in a secure mode.

The host device (101), card (102) telephone's SIM card (103) or terminal (104) will hold in their circuitry compatible microprocessors and software which are the object of this invention.

The manufacturer of the microprocessor would load the operating system, module containing the encryption, currency conversion formulas and software to operate the device.

The important function of controlling funds will be safeguarded by an encryption system (401) which could be RSA, Elliptic Curve or other algorithm but principally in the same format for both the transmitting and receiving devices.

The manufacturer would sell the device to an issuer (301) who would then distribute it to users (302) for further distribution.

The issuer would encode the identification of the user whose details will be written to the Master File (402) in encrypted form and will issue a personal device number. This number will be held in the Master File and will be the identifying number to be used in all transactions..

Monies will be loaded by the user (302) onto the device from a terminal which could be a Bank Terminal, a remote terminal, a hand-held terminal, a pocket terminal or other device.

The user would have to enter the Bank or Banks' Codes and Account Numbers (304) that would be used to load cash on to the card and respective Pin Numbers or the identification numbers of the payer so that these can be used for verification purposes This information would be held on the card's Master File (401) and encrypted (402). The currency code would be loaded from the host terminal which would then be converted internally in the microprocessor object of this invention to U.S. Dollars (because 46 countries around the world are aligned to it) to be stored in the U.S. Dollar slot while at the same time loading the local slot if both are held in the same currency. In Europe, it could be the Euro.

Likewise, the Debit/Credit card Numbers (305) will be held on file should the user request funds from those sources.

The Master File (401) will contain:
Card Serial Number
Name of user
Address of user
Bank Code and Account Number = up to six Banks or Fund holders
Currency code of local currency
Credit/Debit Card Codes and Numbers = up to six institutions.
Vectors from fingerprint, iris or voice sensors.
Fixed Input: Transaction rate x 2
Fixed Input: Transaction Bank Code and Account Number x 2

### Loading of Cash

The cash loaded will be immediately converted to U.S.Dollars at the current rate of exchange and all payments on the card will be made at the average exchange rate held on the card.

No matter if exchange rates vary, the rate in six decimals will be averaged according to the amount held on the card at the time of expenditure. See the example overleaf.

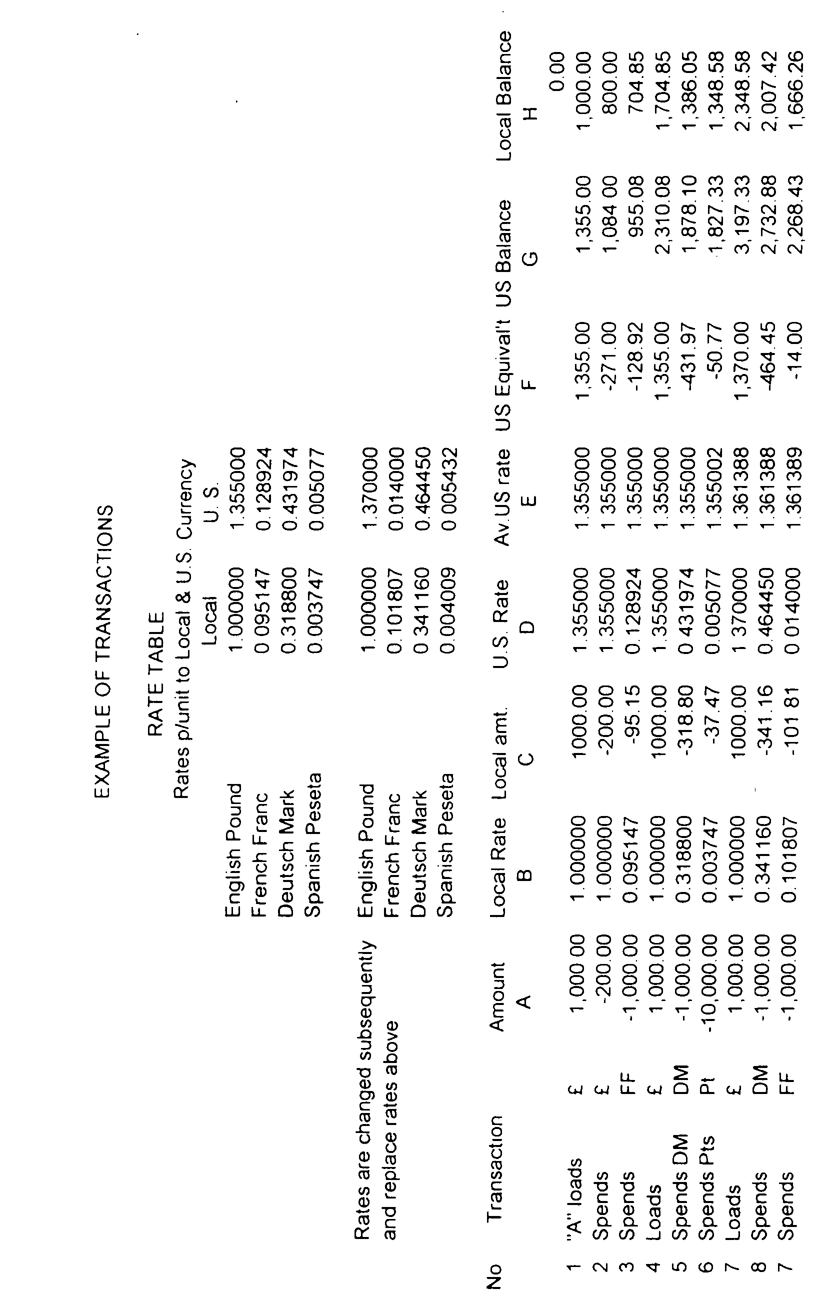

The formulas for transactions are:
- Loading Rates:: At time of loading from a Bank
The rates held by the bank using the international currency designation, i.e: (182) = French Francs. (140) =.U.S Dollars (or equivalent digital designation), etc. are transferred to the Currency table.
If loading from another terminal, the average rate held on that terminal
The U.S. Dollar rate is copied into the U.S. Rate column D
The local rate will always remain I in column B
- Loading funds:: A x Designation in local currency.
A x Designation in U.S. currency = F (U.S. equivalent)
A x Local Currency rate = C (Local amount)
C + H = Accumulated local currency
F + G = Accumulated U.S. currency
G / H = Average rate in U.S. Dollars and is held in E
Transaction charge adds one to the Transaction accumulator
- Disbursing funds:: A x E = F (U.S. Equivalent)
A x B = C (Local Equivalent)
F- G = G (U.S. Accumulated)
A - H = H (Local Accumulated)
G / H = Average rate in U.S. Dollars confirmed.
Transaction charge adds one to the Transaction accumulator
- Differences:: Exchange rates vary and there may be occasions when the local balance and U.S. balance do not equate exactly, in which case the difference between both balances will be placed in the U.S. Currency balance at the average rate.
- Encryption:: A Private key copied from the Key Table will enable an amount transacted to be encrypted The key will be generated by the device (101) and held in the Key Table.(306)
- Loading Local Funds Not Au-authorized for foreign use: Funds which are to be spent locally in a country that has exchange control will be "flagged" and cannot be used for foreign use.

Name and Bank Account Number or Funding Numbers will be held in a look-up table so that the user can access numbers when loading.

Verification of Identity will be carried out through a Pin Number, Fingerprint, Iris, Hand or Facial Vectors (if a reader is attached to a terminal), or Voice Terminal.(307) A password could also be stored in case none of the above apply.

The formulas for the Pin Number identification:
PIN Code designated by user or
PIN Code determined by issuer
Fingerprint vectors will be produced by a fingerprint sensor attached to the issuer's computer. Similarly, the Iris and Voice vectors will be produced by the issuers. In the future, it may be possible to use a FingerChip sensor on the card.

Security keys: will be determined through the RSA algorithm as the preferred code by financial institutions or other algorithm chosen by the issuer, though it must be compatible with the rest of the world.

Transaction charges: Every transaction will be charged at a rate in U.S. Currency held in a rate table and credited to an account held in a Bank Account listing. Two rates and account numbers have been allowed to enable the issuer to draw a fee on each transaction as well as the principals.

Every time the user loads or unloads funds from a Bank, the transaction charge accumulator will be emptied and the respective issuer's and principals accounts will be credited to the account numbers held in the account table. This is an automatic operation which the user has no control over. (308)

The transaction charge/s will be determined by the issuer and the principals.

Should the user wish to charge his loading to a VISA, MasterCard, American Express, Diners Club, Proton or other debit/credit card, the respective Account Number will be matched by the Credit/Debit Card terminal and if agreed, draw the funds he requires.. The code for the look-up table will have to be pre-defined in numerals, e.g.
4xxx = VISA
5xxx = MasterCharge
xxxx = American Express
xxxx = Diners' Club
xxxx = Proton
xxxx = Switch
etc.

The terminal would have to issue a receipt for all transactions.

Transactions will be accumulated in banks in which loading and disbursements are stored and will show:

| Date | Type of Transaction | Terminal Designation | Amount |
|---|---|---|---|
| xx/xx/2001 | Credit | HSBC | In transaction currency |
| | Debit | Tesco | " " |
| | Debit | Macys | " " |

### (From Host terminal)

The user would be able to read off transactions and balances through a terminal or computer linked to a terminal. Only the last twenty transactions would be held.

No attempt will be made to hold any debit/credit card authorizations or running transactions on each of the cards as other transactions may be performed not using the Smart Card or terminal object of this invention and therefore any accumulations would be meaningless.

The card, through the terminal, would show the user at all times the balance of cash held in both local and foreign currencies before he enters any amounts

The moves the user must make are:
- To load the card with static data:: He must enter his name and address
Bank name
Bank Account number/s
Debit/Credit Card Numbers
Identification Numbers (PIN)
The Serial Number of the Card will be automatic and copied every time the $Card is used.
(This information will be held in a secure magnetic. File at the Agent's address.
- If biometrics are in operation:: Have his fingerprints, eyes or voice "vectored"

All these operations would be done by the issuer on a computer.

When the user submits the Smart Card to a Bank terminal, he will enter
PIN Number or submit fingerprints, eyes or voice for identification
Enter medium code on which he wishes to draw funds
Enters amount required

The host terminal will load the amount required in local currency and this will be stored in the local currency area on the card. If the funds are authorized for foreign use, they will be converted to U U.S. Dollars and U.S. Dollar slot will also be updated, otherwise it will be ignored..

When the user spends money, the host terminal will pick up his Private key but he has to enter:
PIN Number or submit fingerprints, eyes or voice for identification
Enter currency and amount of transaction

If in local currency, the amount will be deducted from the local slot or if it is in foreign currency, it will convert the funds at the average rate held in memory to the currency of the country and deduct the amount from the U.S Dollars slot..

The Issuer can be any person or organization that holds money on their card or terminal. This money would have been received from the Bank or other cards. The user would not be able to "fiddle" the system to pay out more than the amount held in the card's or terminal's balance. It is tantamount to a person paying out money from his wallet when he does not have it.

Safeguards will be placed on the terminal to ensure that "monies" can only be received from legitimate sources, e.g. a Bank Account or other legitimate user. If a card is stolen and the holder submits it knowing the PIN number and the user has reported it stolen, the issuer can broadcast the stolen serial number to "on line" terminals and have the card voided.. It can also have the card voided through the Bank Accounts.

If space allows, other data can be held on the Smart Card, such as telephone numbers, Internet addresses, etc.

This invention does not include devices, algorithms, formulas and other items already in the public domain. Neither does it include terminals of any kind.

The Flowcharts appear overleaf

| **FILE SPECIFICATIONS** | | | |
|---|---|---|---|
| MASTER FILE | | | |
| BYTES DIGITS | | FUNCTION | EXPLANATION |
| Module Fixed Data | | | |
| 1-40 | Formula for converting currencies | | |
| | | | |
| 41-500 | Encryption engine | | |
| (Above would use the established arithmetic logic unit embedded in the microprocessor) | | | |

| Fixed Data | | | |
|---|---|---|---|
| 1-2 | XX | Card Type | Cash Card; Bank Card; Credit Card, etc |
| | | | |
| 3-20 | C x 20 | Name of User | Encrypted |
| | | | |
| 21-60 | C x 40 | Address of User | Encrypted |
| | | | |
| 61-75 | X x 16 | Bank No. & Account | Bank or Debit/Credit Card Account |
| | | | |
| 76-155 | X x 16 x 5 | Bank No. & Account | Up to 5 further accounts |
| | | | |
| 156-161 | X x 6 | Pin Number | PINs up to six digits |
| | | | |
| 161 - 200 | X x 40 | Expansion reserve | |

| AUTOMATIC PROCESSING | | | |
|---|---|---|---|
| EEPROM | | | |
| 201 - 205 | X x 4 | Currency | Abbreviation or Code |
| | | | |
| 205 - 215 | X x 10 | Local Currency Rate | To U.S. Dollars |
| | | | |
| 216 - 225 | X x 10 | Average U.S. Rate | Accumulated U.S. Balance over Accumulated Local Currency |
| | | | |
| 226 - 240 | X x 15 | Local Currency Balance | Balance + Loadings - Drawings |
| | | | |
| 241 - 255 | X x 15 | U.S. Currency Balance | Balance at average rate + loadings at latest rate - drawings at average rate |
| | | | |
| 256 - 555 | X x 200 | Transaction Listings | Up to 20 transactions stored |
| | | | |
| 555 - 558 | X x 4 | Transaction Rate A | Principal's transaction rate |
| | | | |
| 559 - 563 | X x 4 | Transaction Rate B | Issuer's transaction rate |
| | | | |

| INPUT FILES | | | |
|---|---|---|---|
| FLASH MEMORY | | | |
| 564 - 566 | X x 2 | Transaction Code | Credits or Debits Plus or Minus |
| | | | |
| 567 - 573 | X x 6 | Transaction Accumulator A | Transaction Unit x Rate |
| | | | |
| 574 - 580 | x x 6 | Transaction Accumulator B | Transaction Unit x Rate |
| | | | |
| 581 - 582 | X x 1 | Transaction Unit | |
| | | | |
| 583 - 599 | X x 16 | Amount with decimals | 14 units and 2 decimals |
| | | | |
| 576 - 584 | X x 8 | Date of Transaction | |
| | | | |

| VERIFICATION PARAMETERS | | | |
|---|---|---|---|
| PIN Number | | | |
| | | | |
| Fingerprint, Iris or Voice Vectors | | | |
| | | | |
| Host Terminals: Voided Serial Numbers | | | |
| | | | |

## Claims

1. A microprocessor which has the ability to hold secure information employing one of many algorithms and storing personal identification data of a user or terminal holder and which can be employed both in a Smart Card or terminal.

2. The microprocessor will contain formulas for carrying out high speed encryption and the conversion of currencies

3. The microprocessor has the ability to convert monies to any world currency.

4. The microprocessor enables the storage of vectors for fingerprints, iris, hand face or voice for the identification of a user.

5. The microprocessor has the ability to store transactions in local and foreign currencies.

6. The microprocessor can distinguish between local funds authorized for conversion to foreign currencies or those which are not authorized by the local exchange control authorities.
